# EUROPÄISCHE PATENTSCHRIFT

(11) **EP 1 986 892 B1**
(45) Veröffentlichungstag und Bekanntmachung des Hinweises auf die Patenterteilung: **17.06.2009**
(21) Anmeldenummer: 07722881.5
(22) Anmeldetag: 21.02.2007
(51) Int. Cl.: B60R 21/215

(54) **LUFTSACKFÜHRUNG MIT ABDECKUNG**
AIRBAG GUIDE WITH A COVERING
GUIDE DE COUSSIN GONFLABLE AVEC CAPOT

(30) Priorität: 22.02.2006 DE 102006008564
(43) Veröffentlichungstag der Anmeldung: 05.11.2008
(73) Patentinhaber: PEGUFORM GMBH, 79268 Bötzingen (DE)
(72) Erfinder: NOGARET, Eric, F-68600 Biesheim (FR); FREYSTEDT, Bernd, 65187 Wiesbaden (DE)
(74) Vertreter: Neunert, Peter Andreas
(86) Internationale Anmeldenummer: PCT/EP2007/001504
(87) Internationale Veröffentlichungsnummer: WO 2007/096147

(56) Entgegenhaltungen:
- EP-A1- 0 465 869
- EP-A1- 0 715 992
- DE-U1- 29 811 739
- FR-A1- 2 863 570
- JP-A- 2002 337 640
- JP-A- 2005 212 695
- JP-A- 2005 239 023
- US-A- 5 527 063
- US-A1- 2005 110 252

## Beschreibung

Die vorliegende Erfindung betrifft eine Luftsackführung mit Abdeckung für Kraftfahrzeuge nach dem Oberbegriff des Anspruchs 1.

Die Erfindung betrifft weiterhin ein Verfahren zum Öffnen einer Abdeckung einer Luftsackführung mit den Merkmalen des Anspruchs 16.

In der gattungsgemäßen DE 298 11 739 U1 wird eine Armaturentafel für Kraftfahrzeuge beschrieben mit einem Basisteil und einem in das Basisteil integrierten, durch einen sich aufblasenden Luftsack beaufschlagbaren Luftsackdeckel, wobei die vom Basisteil und vom Luftsackdeckel gebildete, im eingebauten Zustand zum Fahrgastraum weisende Fläche mit einer Kaschierung überzogen ist. Die Kaschierung ist bevorzugt im Bereich des Übergangs zwischen Basisteil und Luftsackdeckel mit einer Sollbruchlinie versehen. Darüber hinaus weist die Armaturentafel ein Strukturelement auf, das einen Schusskanalabschnitt aufweist, der den Luftsack beim Entfalten in Richtung des Luftsackdeckels lenkt.

Weitere Verfahren und Einrichtungen zur Abdeckung von Airbags sind in der DE 199 48 021 A1, der EP 0 465 869 A1 und der EP 0 715 992 A1 beschrieben.

Allen bekannten oben genannten Einrichtungen zur Abdeckung von Airbags ist gemeinsam, dass sie vollständig in das Basisteil, wie z. B. die Armaturentafel oder die Seitenverkleidungen des Kraftfahrzeugs, integriert sind. Dies hat einen relativ hohen Aufwand bei der Fertigung des Basisteils mit integriertem Airbag-Modul zur Folge.

In den japanischen Patentanmeldungen JP 2002/337640 A, JP 2005/212695 A und JP 2005/239023 A werden Airbagabdeckungen beschrieben, bei denen der Deckel nicht integraler Bestandteil des Basisteils ist. Sämtliche drei Schriften beschreiben jedoch Ausführungsformen, bei denen Deckel und Luftsackführung einstückig ausgeführt und dabei starr miteinander verbunden sind. Auch diese Ausführungsformen fordern eine relativ aufwändige Fertigungstechnik und haben gleichzeitig den Nachteil, dass die starr am Deckel angeordnete Luftsackführung sich beim Öffnen des Airbags als Hindernis erweisen kann, was durch entsprechende zusätzliche Maßnahmen verhindert werden muss.

Die Aufgabe der Erfindung ist es, eine Luftsackführung mit Abdeckung zur Verfügung zu stellen, die die Nachteile des Standes der Technik nicht aufweist und getrennt vom Basisteil auf einfache Weise kostengünstig separat gefertigt werden kann.

Es ist eine weitere Aufgabe der Erfindung, ein Konzept zur Verfügung zu stellen, das es erlaubt, die Luftsackführung mit Abdeckung in Modulbauweise nachträglich in ein betreffendes Basisteil einzufügen.

Eine weitere Aufgabe der Erfindung besteht darin, ein Verfahren zum Öffnen einer Abdeckung einer Luftsackführung zur Verfügung zu stellen, das in unterschiedlichen Fahrzeugtypen eingesetzt werden kann.

Gelöst wird die Aufgabe durch eine Luftsackführung mit Abdeckung mit den Merkmalen des Anspruchs 1 sowie ein Verfahren zum Öffnen einer Abdeckung einer Luftsackführung nach Anspruch 16.

Bevorzugte Ausführungsformen der erfindungsgemäßen Luftsackführung mit Abdeckung sind in den Unteransprüchen wiedergegeben.

Die erfindungsgemäße Luftsackführung mit Abdeckung besteht im Wesentlichen aus einem Deckel, einer Luftsackführung sowie Scharnieren, die den Deckel und die Luftsackführung miteinander verbinden. Die Luftsackführung mit Abdeckung ist so konzipiert, dass sie in eine Austrittsöffnung für einen Airbag in einem Basisteil, wie z. B. einer Armaturentafel oder einer Seitenverkleidung des Fahrzeugs, eingefügt werden kann. Die Verbindung der Luftsackführung mit Abdeckung mit dem Basisteil erfolgt dabei über die Luftsackführung, die wiederum aus einem Schusskanalabschnitt und einem Auflageabschnitt aufgebaut ist.

Die Verbindung zum Basisteil erfolgt im Randbereich der Austrittsöffnung für den Airbag über den Auflageabschnitt der Luftsackführung, der auf der dem Fahrgastraum abgewandten Seite mit dem Basisteil verbunden ist. In diesem Randbereich weist das Basisteil ein Lippenprofil auf. Das Basisteil und die Luftsackführung sind dabei so zueinander angeordnet, dass zwischen dem Lippenprofil und der Luftsackführung eine Art Nut entsteht, in die der Deckel der Luftsackführung eingefügt werden kann.

Bei einer bevorzugten Ausführungsform weist der Deckel der Luftsackführung umlaufend eine zurückführende Abschrägung auf, auf der im eingebauten Zustand das Lippenprofil aufliegt. Dabei wird der Deckel zwischen dem Basisteil und der Luftsackführung eingeklemmt. Gleichzeitig wird der Bereich zwischen Deckel und Basisteil durch das Lippenprofil des Basisteils abgedichtet.

Bei einer bevorzugten Ausführungsform ist der Deckel so ausgeführt, dass er mindestens eine Sollbruchlinie aufweist, die im Fall der Beaufschlagung des Deckels durch den sich entfaltenden Airbag aufbricht, wodurch die Austrittsöffnung für den Airbag geöffnet wird.

Vorteilhaft kann es jedoch auch sein, wenn der Deckel aus einem Stück besteht und beim Öffnen als ganzes Teil erhalten bleibt.

Im eingebauten Zustand ist der Deckel mitsamt des Basisteils auf der zum Fahrgastraum weisenden Seite mit einer Schaumschicht sowie einer Formhaut, Folie, Lederhaut oder einem textilen Gewebe überzogen. Beim Schäumprozess dient das Lippenprofil als Abdichtung gegen eintretendes Schaummaterial.

Neben dem Auflageabschnitt weist die Luftsackführung einen Schusskanalabschnitt auf, der von der Austrittsöffnung für den Airbag in den Bereich hineinragt, in dem der Airbag gelagert ist.

In einer bevorzugten Ausführungsform erstreckt sich der Schusskanalabschnitt von der Öffnung im Basisteil nahezu rechtwinklig nach hinten in den den zusammengefalteten Airbag verdeckenden Bereich. Dieser Schusskanalabschnitt dient dazu, den Airbag beim Entfalten in Richtung des Deckels zu führen. Entsprechend den hohen Belastungen beim Entfalten des Airbags ist die Luftsackführung aus verstärktem Material, wie z. B. langfaserverstärktem Polypropylen, gefertigt.

Besonders wichtig für den Schutz der Kraftfahrzeuginsassen beim Unfall ist, dass sichergestellt wird, dass im Falle eines Aufpralls keine Teile des Deckels als Splitter in den Fahrgastraum gelangen. Aus diesem Grunde ist der Deckel mit mindestens einem Scharnier fest mit der Luftsackführung verbunden.

Bei einer bevorzugten Ausführungsform wird ein Scharnier aus einem Material, vorzugsweise einem verstärkendem Gewebe, gebildet, das den Deckel auf der Rückseite nahezu vollständig bedeckt und auch über nahezu den gesamten Innenbereich des Schusskanals mit der Luftsackführung verbunden ist. Auf diese Weise wird ein Zersplittern des Deckels verhindert und es wird sichergestellt, dass der Deckel fest mit dem Basisteil über die Luftsackführung verbunden ist. Dadurch, dass ein Scharnier als verstärkendes Gewebe ausgebildet ist und quasi den gesamten Bereich des Deckels abdeckt, wird auch verhindert, dass einzelne kleinere Splitter in den Fahrgastraum gelangen.

Die erfindungsgemäße Luftsackführung mit Abdeckung ist so konzipiert, dass sie in Modulbauweise in einer dafür vorgesehenen Austrittsöffnung für den Airbag in einem entsprechenden Basisteil, wie z. B. einem Träger für Armaturen, einer Instrumententafel oder einer Seitenverkleidung oder Teilen davon, eingesetzt werden kann.

Die gesamte Vorrichtung mit Luftsackführung, Deckel und Scharnier kann in einem Prozessschritt, beispielsweise durch Spritzgießen, gefertigt werden.

In einer bevorzugten Ausführungsform können bei diesem Prozessschritt unterschiedliche Materialkomponenten eingesetzt werden, so dass beispielsweise für die Luftsackführung ein besonders hochfestes Material eingesetzt wird, während für den Deckel weniger feste und besonders elastische Materialien verwendet werden.

Das Fertigungs- und Anwendungsprinzip bringt es mit sich, dass die Luftsackführung mit Abdeckung nachträglich in das entsprechende Basisteil eingesetzt werden kann, wodurch die Herstellungskosten gesenkt werden können. Diese Modulbauweise hat darüber hinaus den Vorteil, dass die Luftsackführung mit Abdeckung ohne aufwändige Anpassungsentwicklung auch für andere Fahrzeugtypen verwendet werden kann.

Durch ein entsprechendes Zusammenspiel des Lippenprofils mit der Abschrägung des Deckels gelingt es, den Widerstand gegen die Öffnungskraft genau zu kalibrieren.

Im Folgenden wird die Erfindung anhand von Abbildungen ausführlich erläutert. Dabei zeigen:
- Figur 1: eine perspektivische Darstellung einer Armaturentafel als Basisteil für eine erfindungsgemäße Luftsackführung mit Abdeckung,
- Figur 2: eine Schnittzeichnung der erfindungsgemäßen Luftsackführung mit Abdeckung mit einem zweiteiligen Deckel,
- Figur 3: eine Schnittzeichnung der erfindungsgemäßen Luftsackführung mit Abdeckung mit einem einteiligen Deckel und
- Figur 4: einen Ausschnitt aus der Schnittzeichnung der erfindungsgemäßen Luftsackführung mit Abdeckung aus den Figuren 2 und 3.

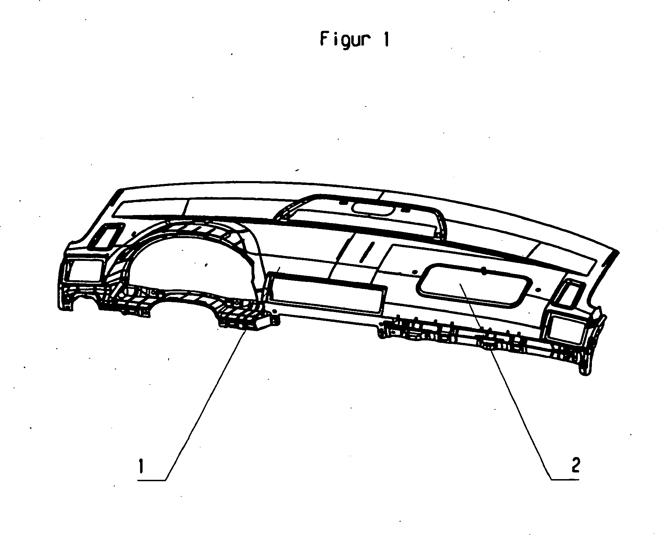

Die Figur 1 zeigt eine Armaturentafel als Basisteil 1 für eine Luftsackführung mit Abdeckung. Dabei ist im Bereich des Beifahrers eine Öffnung 2 als Austrittsöffnung für den Airbag im Basisteil 1 vorgesehen.

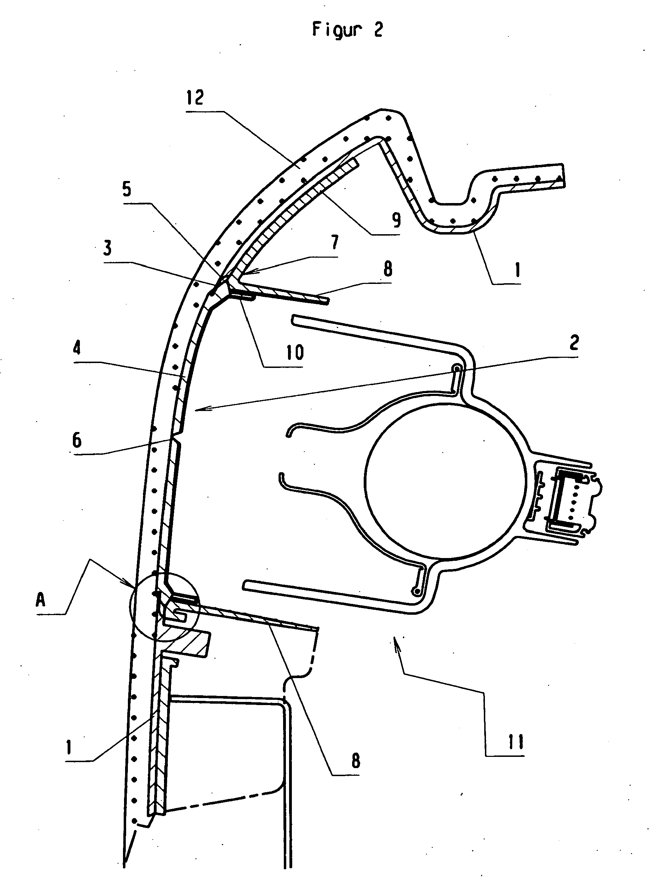

In der Figur 2 wird anhand einer Schnittzeichnung das Prinzip der erfindungsgemäßen Luftsackführung mit Abdeckung erläutert. Die Luftsackführung mit Abdeckung, bestehend aus einem Deckel 4, einer Luftsackführung 7 und einem Scharnier 10 ist in eine Öffnung 2 des Basisteils 1 dadurch eingefügt, dass die Luftsackführung mit Abdeckung über den Auflageabschnitt 9 der Luftsackführung 7 im Randbereich der Öffnung 2 mit der dem Fahrgastraum abgewandten Seite des Basisteils 1 verbunden ist. Der Auflageabschnitt 9 kann dabei so ausgebildet sein, dass er der Form des Basisteils 1 im Randbereich nachgebildet und angepasst ist.

Neben dem Auflageabschnitt 9 weist die Luftsackführung 7 einen Schusskanalabschnitt 8 auf, der in den den zusammengefalteten Airbag abdeckenden Bereich 11 hineinragt.

Der Deckel 4 ist über zwei Scharniere 10 mit der Luftsackführung 7 fest verbunden. In der in der Figur 2 gezeigten Ausführungsform ist das Scharnier 10 als Gewebe ausgebildet, das mit Ausnahme des Bereichs der Sollbruchlinie 6 den gesamten rückwärtigen Bereich des Deckels 4 und den inneren Bereich des Schusskanals 8 abdeckt und damit verbunden ist. Ein derartiges Scharnier 10 garantiert eine feste Verbindung zwischen Luftsackführung 7 und Deckel 4 und verhindert gleichzeitig das Zersplittern des Deckels 4 beim Öffnen.

Bei der in Figur 2 dargestellten Ausführungsvariante weist der Deckel 4 in seinem Zentrum eine Sollbruchlinie 6 auf, die beim Aufprall des sich entfaltenden Airbags bricht und den Weg für den Airbag in den Fahrgastraum freimacht. Die Austrittsöffnung 2 für den Airbag ist durch ein Lippenprofil 3 abgedichtet, das im Randbereich der Öffnung 2 des Basisteils 1 ausgebildet ist. Das Lippenprofil 3 dient im Zusammenspiel mit der Luftsackführung 7 als Halterung für den Deckel 4. Das Lippenprofil 3 dient während des Schaumvorgangs gleichzeitig als Abdichtung gegen das noch fließfähige Schaummaterial, mit dem das Basisteil 1 und der Deckel 4 im eingebauten Zustand überzogen sind.

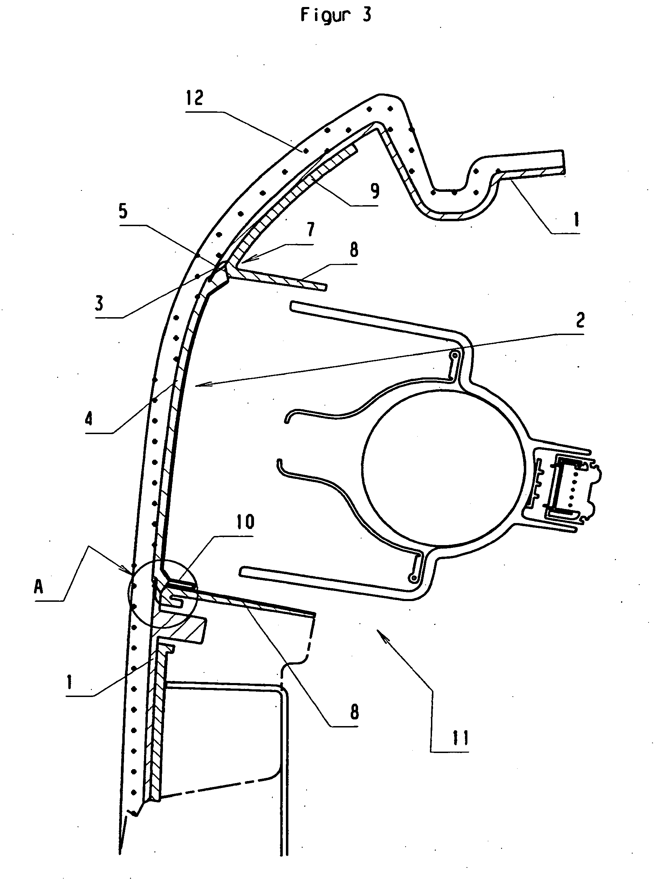

Die Figur 3 entspricht weitgehend der Figur 2. Hier ist allerdings der Deckel 4 einteilig ausgeführt und die feste Verbindung des Deckels 4 mit der Luftsackführung 7 dementsprechend lediglich über ein Scharnier 10 gewährleistet..Auch in diesem Fall ist das Scharnier 10 als Gewebe ausgebildet, das den gesamten rückwärtigen Bereich des Deckels 4 und den inneren Bereich des Schusskanals 8 abdeckt.

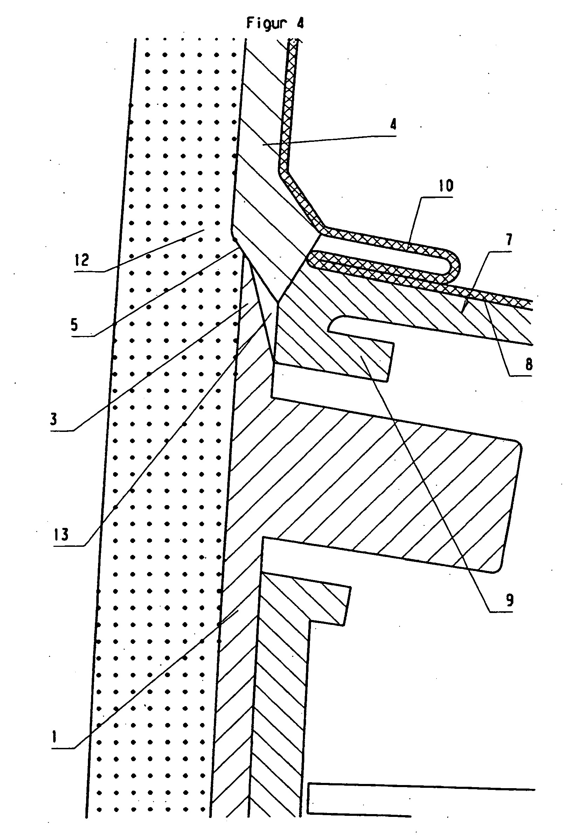

Die Figur 4 zeigt einen Ausschnitt aus der in den Figuren 2 und 3 gezeigten Schnittzeichnungen, aus dem das erfindungsgemäße Verfahrensprinzip besonders gut zu erkennen ist. Gezeigt wird der Randbereich der Öffnung 2 für den Austritt des Airbags im Zustand der eingebauten Luftsackführung mit Abdeckung. In diesem Bereich besitzt das Basisteil 1 ein ausgeprägtes Lippenprofil 3, das zusammen mit der Luftsackführung 7 eine Nut 13 ausbildet, in die der Deckel 4 mit seiner Abschrägung 5 eingeklemmt ist. Basisteil 1 und Deckel 4 sind zur Fahrgastraumseite hin mit einer Schaumschicht und einer Dekorfläche 12 überzogen. In dieser Vergrößerung ist ebenfalls das Gewebescharnier 10 zu erkennen, das den Deckel 4 mit der Luftsackführung 7 verbindet, wobei die Rückseite des Deckels 4 und die Innenseite des Schusskanals 8 vollständig mit dem Gewebescharnier 10 bedeckt sind.

Bezugszeichenliste
- 1: Basisteil
- 2: Öffnung
- 3: Lippenprofil
- 4: Deckel
- 5: Abschrägung
- 6: Sollbruchlinie
- 7: Luftsackführung
- 8: Schusskanalabschnitt
- 9: Auflageabschnitt
- 10: Scharniere
- 11: Airbag abdeckender Bereich
- 12: Schaumschicht mit Dekorfläche
- 13: Nut

## Patentansprüche

1. Luftsackführung mit Abdeckung, insbesondere für Kraftfahrzeuge, umfassend einen Deckel (4), eine Luftsackführung (7) sowie Scharniere (10), mit denen der Deckel (4) und die Luftsackführung (7) verbunden sind, wobei die Luftsackführung (7) im Randbereich einer Öffnung (2) in einem Basisteil (1) fest mit dem Basisteil (1) verbunden ist, wobei der Deckel (4) im eingebauten Zustand die im Basisteil (1) befindliche Öffnung (2) abdeckt, **dadurch gekennzeichnet, dass** der Randbereich der Öffnung (2) umlaufend ein Lippenprofil (3) aufweist und der Deckel (4) zwischen dem Lippenprofil (3) und der Luftsackführung (7) angeordnet ist.

2. Luftsackführung mit Abdeckung nach Anspruch 1,
**dadurch gekennzeichnet, dass** der Deckel (4) umlaufend eine zurückführende Abschrägung (5) aufweist, auf der das Lippenprofil (3) im eingebauten Zustand aufliegt und den Deckel (4) einklemmt.

3. Luftsackführung mit Abdeckung nach Anspruch 1 oder 2,
**dadurch gekennzeichnet, dass** der Bereich zwischen Deckel (4) und Öffnung (2) durch das Lippenprofil (3) des Basisteils (1) abgedichtet ist.

4. Luftsackführung mit Abdeckung nach einem Ansprüche 1 bis 3,
**dadurch gekennzeichnet, dass** der Deckel (4) mindestens eine Sollbruchlinie (6) aufweist.

5. Luftsackführung mit Abdeckung nach einem Ansprüche 1 bis 4,
**dadurch gekennzeichnet, dass** der Deckel (4) und das Basisteil (1) im eingebauten Zustand auf der zum Fahrgastraum weisenden Seite mit einer Schaumschicht mit einer Dekorfläche (12) überzogen sind.

6. Luftsackführung mit Abdeckung nach einem der Ansprüche 1 bis 5,
**dadurch gekennzeichnet, dass** die Luftsackführung (7) aus einem Schusskanalabschnitt (8) und einem Auflageabschnitt (9) aufgebaut ist.

7. Luftsackführung mit Abdeckung nach einem der Ansprüche 1 bis 6,
**dadurch gekennzeichnet, dass** die Luftsackführung (7) mit ihrem Auflageabschnitt (9) der vom Fahrgastraum abgewandten Seite des Basisteils (1) in der Form angepasst und mit diesem fest verbunden ist.

8. Luftsackführung mit Abdeckung nach einem der Ansprüche 1 bis 7,
**dadurch gekennzeichnet, dass** die Luftsackführung (7) mit ihrem Schusskanalabschnitt (8) von der Öffnung (2) im Basisteil (1) nahezu rechtwinklig nach hinten, in einen den Airbag verdeckenden Bereich (11) zeigt.

9. Luftsackführung mit Abdeckung nach einem der Ansprüche 1 bis 8,
**dadurch gekennzeichnet, dass** die Luftsackführung (7) aus einem hochfesten Material, wie z.B. langfaserverstärktes Polypropylen, gefertigt ist.

10. Luftsackführung mit Abdeckung nach einem der Ansprüche 1 bis 9,
**dadurch gekennzeichnet, dass** die Scharniere (10), mit denen der Deckel (4) und die Luftsackführung (7) verbunden sind, aus Gewebe gefertigt sind.

11. Luftsackführung mit Abdeckung nach einem der Ansprüche 1 bis 10,
**dadurch gekennzeichnet, dass** die Scharniere beim Beaufschlagen des Deckels durch den sich aufblähenden Airbag als Splitterschutz fest mit dem sich zum Fahrgastraum hin öffnenden Deckel (4) und der Luftsackführung (7) verbunden sind.

12. Luftsackführung mit Abdeckung nach einem der Ansprüche 1 bis 11,
**dadurch gekennzeichnet, dass** das Gewebe der Scharniere (10) die dem Fahrgastraum abgewandte Seite des Deckels (4) und den inneren Bereich des Schusskanalabschnitts (8) der Luftsackführung (7) nahezu vollständig bedeckt und mit diesen verbunden ist.

13. Luftsackführung mit Abdeckung nach einem der Ansprüche 1 bis 12,
**dadurch gekennzeichnet, dass** das Basisteil (1) ein Träger für eine Instrumententafel oder eine Seitenverkleidung oder ein Teil eines Trägers für eine Instrumententafel oder eine Seitenverkleidung ist.

14. Luftsackführung mit Abdeckung nach einem der Ansprüche 1 bis 13,
**dadurch gekennzeichnet, dass** die gesamte Vorrichtung mit Luftsackführung (7), Deckel (4) und Scharnier (10) in einem Prozessschritt, beispielsweise durch Spritzgießen, gefertigt ist.

15. Luftsackführung mit Abdeckung nach einem der Ansprüche 1 bis 14,
**dadurch gekennzeichnet, dass** die gesamte Vorrichtung in einem Prozessschritt unter Verwendung von unterschiedlichen Materialkomponenten gefertigt ist.

16. Verfahren zum Öffnen einer Abdeckung einer Luftsackführung nach einem der Ansprüche 1 bis 15, wobei
- beim Auslösen des Airbags der sich aufblähende Airbag durch die Luftsackführung (7) auf den Deckel (4) gelenkt wird,
- der Deckel (4) durch den Druck des sich entfaltenden Airbags aufklappt oder an der Sollbruchlinie (6) bricht und dann aufklappt, wobei die Austrittsöffnung (2) für den Airbag in den Fahrgastraum freigegeben wird,
- der Deckel (4) oder Teile des Deckels (4) durch mindestens ein Scharnier (10) als Splitterschutz festgehalten werden, um Verletzungen durch in den Fahrgastraum eindringende Teile des Deckels (4) zu vermeiden,
**dadurch gekennzeichnet, dass**
- der Öffnungswiderstand des Deckels (4) durch die Ausführung des Lippenprofils (3) des Basisteils (1) im Bereich der Austrittsöffnung (2) im Zusammenspiel mit der Abschrägung (5) des Deckels (4) kalibriert wird.

## Claims

1. An airbag guide with a covering, particularly for motor vehicles, comprising a covering (4), an airbag guide (7) as well as hinges (10) used to connect the covering (4) and the airbag guide (7), with the airbag guide (7) being rigidly connected to a base portion (1) in the edge area of an opening (2) in a base portion (1), wherein the covering (4) covers the opening (2) provided in the base portion (1) in the installed condition, **characterised in that** the edge area of the opening (2) has a lip profile (3) along its circumference and the covering (4) is disposed between the lip profile (3) and the airbag guide (7).

2. The airbag guide with a covering as claimed in claim 1, **characterised in that** the covering (4) has a retracting chamfer (5) along its circumference, on which the lip profile (3) rests and clamps the covering (4) in the installed condition.

3. The airbag guide with a covering as claimed in claim 1 or 2, **characterised in that** the area between the covering (4) and the opening (2) is sealed by the lip profile (3) of the base portion (1).

4. The airbag guide with a covering as claimed in any one of claims 1 to 3, **characterised in that** the covering (4) has at least one weakened section (6).

5. The airbag guide with a covering as claimed in any one of claims 1 to 4, **characterised in that** in the installed condition, the covering (4) and the base portion (1) are coated on the side facing the passenger compartment with a foam layer having a decorative surface (12).

6. The airbag guide with a covering as claimed in any one of claims 1 to 5, **characterised in that** the airbag guide (7) is constructed from an ejection channel portion (8) and a support portion (9).

7. The airbag guide with a covering as claimed in any one of claims 1 to 6, **characterised in that** the shape of the airbag guide (7) including its support portion (9) is adapted to the part of the base portion (1), which faces away from the passenger compartment, and is rigidly connected thereto.

8. The airbag guide with a covering as claimed in any one of claims 1 to 7, **characterised in that** the ejection channel portion (8) of the airbag guide (7) faces from the opening (2) in the base portion (1) almost at a right angle towards the rear into the area (11) covering the airbag.

9. The airbag guide with a covering as claimed in any one of claims 1 to 8, **characterised in that** the airbag guide (7) is made from a high strength material such as long fibre reinforced polypropylene.

10. The airbag guide with a covering as claimed in any one of claims 1 to 9, **characterised in that** the hinges (10), by means of which the covering (4) and the airbag guide (7) are connected, are made from fabric.

11. The airbag guide with a covering as claimed in any one of claims 1 to 10, **characterised in that** as a shatter protection when the inflating airbag impinges on the covering, the hinges are rigidly connected to the covering (4) opening towards the passenger compartment and to the airbag guide (7).

12. The airbag guide with a covering as claimed in any one of claims 1 to 11, **characterised in that** the fabric of the hinges (10) almost completely covers the part of the covering (4) which faces away from the passenger compartment and the internal area of the ejection channel portion (8) of the airbag guide (7) and is connected thereto.

13. The airbag guide with a covering as claimed in any one of claims 1 to 12, **characterised in that** the base portion (1) is a carrier for an instrument panel or a side trim panel or a part of a carrier for an instrument panel or a side trim panel.

14. The airbag guide with a covering as claimed in any one of claims 1 to 13, **characterised in that** the entire apparatus including the airbag guide (7), the covering (4) and the hinge (10) is made in one process step such as e.g. by injection moulding.

15. The airbag guide with a covering as claimed in any one of claims 1 to 14, **characterised in that** the entire apparatus is made in one process step using different material components.

16. A method for opening a covering of an airbag guide as claimed in any one of claims 1 to 15, wherein
- during activation of the airbag, the inflating airbag is guided through the airbag guide (7) onto the covering (4),
- the covering (4) is opened up by the pressure of the inflating airbag or breaks along the weakened section (6) and subsequently opens up, with the exit opening (2) being cleared for the airbag to expand into the passenger compartment,
- the covering (4) or parts of the covering (4) are held by at least one hinge (10) as a shatter protection, in order to prevent any injuries to be caused by parts of the covering (4) entering the passenger compartment,
**characterised in that**
- the opening resistance of the covering (4) is calibrated by implementing the lip profile (3) of the base portion (1) in the area of the exit opening (2) to interact with the chamfer (5) of the covering (4).

## Revendications

1. Guide de coussin gonflable comportant un capot notamment pour des véhicules automobiles comprenant un couvercle (4), un guide de coussin gonflable (7) ainsi que des charnières (10) reliant le couvercle (4) et le guide de coussin gonflable (7),
le guide de coussin gonflable (7) est relié dans la zone du bord d'une ouverture (2) d'une pièce de base (1), solidairement à cette pièce de base (1), et
en position montée, le couvercle ferme l'ouverture (2) de la pièce de base (1),
**caractérisé en ce que**
la zone du bord de l'ouverture (2) comporte en périphérie un profil de lèvre (3) et le couvercle (4) est installé entre le profil de lèvre (3) et le guide de coussin gonflable (7).

2. Guide de coussin gonflable avec capot selon la revendication 1,
**caractérisé en ce que**
le couvercle (4) comporte une rampe (5) périphérique, dirigée vers l'arrière, et sur laquelle s'appuie le profil en forme de lèvre (3) à l'état monté et pince le couvercle (4).

3. Guide de coussin gonflable avec capot selon la revendication 1 ou 2,
**caractérisé en ce que**
la zone comprise entre le couvercle (4) et l'ouverture (2) est fermée de manière étanche par le profil en forme de lèvre (3) de la pièce de base (1).

4. Guide de coussin gonflable avec capot selon l'une des revendications 1 à 3,
**caractérisé en ce que**
le couvercle (4) comporte au moins une ligne de rupture de consigne (6).

5. Guide de coussin gonflable avec capot selon l'une des revendications 1 à 4,
**caractérisé en ce que**
le couvercle (4) et la pièce de base (1), à l'état monté sont revêtus sur leur face tournée vers l'habitacle, d'une couche de mousse munie d'une surface décorative (12).

6. Guide de coussin gonflable avec capot selon l'une des revendications 1 à 5,
**caractérisé en ce que**
le guide de coussin de gonflable (7) se compose d'un segment de canal de tir (8) et d'un segment d'appui (9).

7. Guide de coussin gonflable avec capot selon l'une des revendications 1 à 6,
**caractérisé en ce que**
le guide de coussin gonflable (7) est adapté par son segment d'appui (9) au côté de la pièce de base (1) non tourné vers l'habitacle, par une adaptation par la forme et le guide est relié solidairement à la pièce de base.

8. Guide de coussin gonflable avec capot selon l'une des revendications 1 à 7,
**caractérisé en ce que**
le guide de coussin gonflable (7) avec son segment de canal de tir (8) est pratiquement dirigé à partir de l'ouvertures (2) dans la pièce de base (1), pratiquement à l'équerre vers l'arrière dans une zone (11) couverte par le coussin gonflable.

9. Guide de coussin gonflable avec capot selon l'une des revendications 1 à 8,
**caractérisé en ce que**
le guide de coussin gonflable (7) est fabriqué en un matériau très résistant tel que par exemple des polypropylènes renforcés par des fibres longues.

10. Guide de coussin gonflable avec capot selon l'une des revendications 1 à 9,
**caractérisé en ce que**
la charnière (10) reliant le couvercle (4) et le guide de coussin gonflable (7) est fabriquée en tissu.

11. Guide de coussin gonflable avec capot selon l'une des revendications 1 à 10,
**caractérisé en ce que**
lors de la sollicitation du couvercle par le coussin en cours de gonflement comme protection contre les éclats de verre, la charnière est solidaire du couvercle (4) qui s'ouvre en direction de l'habitacle et du guide de poche gonflable (7).

12. Guide de coussin gonflable avec capot selon l'une des revendications 1 à 11,
**caractérisé en ce que**
le tissu de la charnière (10), le côté du couvercle (4) non tourné vers l'habitacle et la zone intérieure du segment de canal de tir (8) du guide de coussin gonflable (7) sont pratiquement recouverts en totalité et sont reliés.

13. Guide de coussin gonflable avec capot selon l'une des revendications 1 à 12,
**caractérisé en ce que**
la pièce de base (1) est un support pour un tableau de bord ou un habillage latéral ou une partie d'un support pour un tableau de bord ou un habillage latéral.

14. Guide de coussin gonflable avec capot selon l'une des revendications 1 à 13,
**caractérisé en ce que**
tous les dispositifs avec le guide de coussin gonflable (7), le couvercle (4) et la charnière (10) sont fabriqués au cours d'une étape de procédé par exemple par injection.

15. Guide de coussin gonflable avec capot selon l'une des revendications 1 à 14,
**caractérisé en ce que**
l'ensemble du dispositif est fabriqué au cours d'une étape de fabrication en utilisant des composants de matières différentes.

16. Procédé d'ouverture du capot d'un guide de coussin gonflable selon l'une des revendications 1 à 15,
selon lequel
- au déclenchement du coussin gonflable, le guide (7) dirige le coussin en cours de gonflement contre le couvercle (4),
- le couvercle (4) s'ouvre sous la pression du coussin en cours de gonflement ou se casse au niveau de la ligne de rupture de consigne (6) et s'ouvre, l'orifice de sortie (2) du coussin gonflable se libérant en direction de l'habitacle, et
- le couvercle (4) ou des parties du couvercle (4) sont retenus au moins par une charnière (10) comme moyen de protection contre les éclats, pour éviter des blessures que pourraient provoquer des parties du couvercle (4) projetées dans l'habitacle,
**caractérisé en ce que**
la résistance à l'ouverture du couvercle (4) par la forme de réalisation du profil de lèvre (3) de la pièce de base (1) au niveau de l'orifice de sortie (2) est calibrée en combinaison avec la rampe (5) du couvercle (4).
